# EUROPEAN PATENT APPLICATION

(11) **EP 4 819 319 A1**
(43) Date of publication of application: **07.10.2026**
(21) Application number: 24897330.7
(22) Date of filing: 15.11.2024
(51) Int. Cl.: H01M 50/184, H01M 10/052, H01M 10/0566, H01M 50/107, H01M 50/119, H01M 50/152, H01M 50/538, H01M 50/559, H01M 50/566

(54) **CYLINDRICAL BATTERY**

(30) Priority: 30.11.2023 JP 2023203445
(71) Applicant: Panasonic Intellectual Property Management Co., Ltd., Kadoma-shi, Osaka 571-0057 (JP)
(72) Inventor: OKIMOTO, Ryota, Osaka 571-0057 (JP); YANO, Tsuyoshi, Osaka 571-0057 (JP); UEDA, Tomomichi, Osaka 571-0057 (JP); KAWANISHI, Yuta, Osaka 571-0057 (JP)
(74) Representative: Eisenführ Speiser
(86) International application number: PCT/JP2024/040586
(87) International publication number: WO 2025/115643

(57) **Abstract**

This cylindrical battery comprises: an electrode body (10); an outer can (20) that has a bottomed cylindrical shape and accommodates the electrode body (10) and an electrolyte solution; and a sealing body (30) that closes the opening in the outer can (20). The cylindrical battery includes a positive electrode lead (11) that is connected to a positive electrode constituting the electrode body (10). The cylindrical battery further comprises: a positive electrode current collector plate (40) that is formed in an annular shape, has the positive electrode lead (11) connected thereto, and is welded to the outer can (20); and a gasket (50) that is arranged between the outer can (20) and the sealing body (30) and covers the lower surface of the positive electrode current collector plate (40), which faces the direction of the electrode body (10). The gasket (50) has an inner peripheral wall section (51) that covers an inner peripheral surface (44) forming the peripheral edge of an opening (41) in the positive electrode current collector plate (40).

## Description

### TECHNICAL FIELD

The present disclosure relates to a cylindrical battery.

### BACKGROUND ART

A cylindrical battery generally comprises a wound electrode assembly of a positive electrode and a negative electrode that are spirally wound with a separator interposed therebetween, a bottomed cylindrical housing can that houses the electrode assembly, and a sealing assembly with which an opening portion of the housing can is capped, and has a structure in which a lead extending from the electrode assembly is connected to the sealing assembly (for example, see PATENT LITERATURE 1). The cylindrical battery of PATENT LITERATURE 1 comprises an annular current collecting member to which the lead is connected and which is welded to the sealing assembly, and a gasket that is disposed between the housing can and the sealing assembly.

### CITATION LIST

### PATENT LITERATURE

PATENT LITERATURE 1: International Publication No. WO 2022/270432

### SUMMARY

By the way, while the cylindrical battery is manufactured by, for example, placing the electrode assembly and the current collecting member in the housing can and injecting an electrolyte solution into the housing can, and then welding the sealing assembly and the current collecting member together, as a result of the studies conducted by the present inventors, it has been found that the electrolyte solution adhering to the current collecting member causes a welding defect. If the electrolyte solution exists at the welding spot when the sealing assembly and the current collecting member are welded together, a welding defect may occur due to the vaporized electrolyte solution.

A cylindrical battery according to the present disclosure comprises an electrode assembly, a bottomed cylindrical housing can that houses the electrode assembly and an electrolyte solution, and a sealing assembly with which an opening portion of the housing can is capped, and includes a lead connected to an electrode included in the electrode assembly, the cylindrical battery further comprising an annular current collecting member to which the lead is connected, the annular current collecting member being welded to the sealing assembly, and a gasket that is disposed between the housing can and the sealing assembly and covers a lower surface of the current collecting member that faces the electrode assembly, in which the gasket has an inner peripheral wall that covers an inner peripheral surface forming a peripheral edge of an opening portion of the current collecting member.

According to the cylindrical battery according to the present disclosure, a welding state between the sealing assembly and the current collecting member is good.

### BRIEF DESCRIPTION OF DRAWING

FIG. 1 is a sectional view of a cylindrical battery of an example of an embodiment.
FIG. 2 is an enlarged view of part A of FIG. 1.
FIG. 3 is a view illustrating a step of injecting an electrolyte solution into a housing can in the cylindrical battery of an example of an embodiment (a positive electrode lead and an insulating plate are not illustrated).
FIG. 4 is a view illustrating a modified example of a gasket.

### DESCRIPTION OF EMBODIMENTS

Hereinafter, an example of embodiments of a cylindrical battery according to the present disclosure will be described in detail with reference to the drawings. Configurations formed by selectively combining the constituent elements of a plurality of embodiments and modified examples described below are included within the scope of the present disclosure.

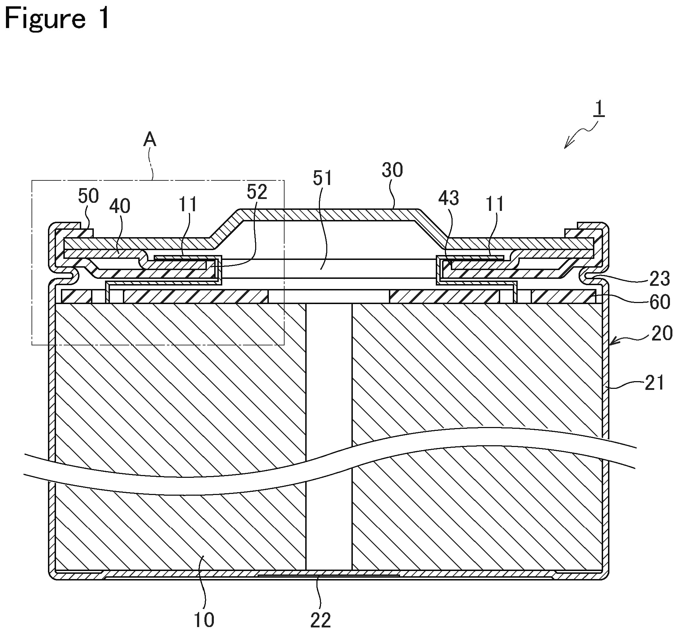

FIG. 1 is a sectional view of a cylindrical battery 1 of an example of an embodiment. As illustrated in FIG. 1, the cylindrical battery 1 comprises an electrode assembly 10, a bottomed cylindrical housing can 20 that houses the electrode assembly 10 and an electrolyte solution, and a sealing assembly 30 with which an opening portion of the housing can 20 is capped. The electrode assembly 10 includes a positive electrode, a negative electrode, and a separator, and has a wound structure in which the positive electrode and the negative electrode are spirally wound with the separator interposed therebetween. The electrolyte solution may be an aqueous electrolyte solution, but in the present embodiment, a non-aqueous electrolyte solution is used. The housing can 20 has a grooved portion 23 formed in a side wall 21, and the sealing assembly 30 is supported by the grooved portion 23 so that the opening portion of the housing can 20 can be capped with the sealing assembly 30. Hereinafter, for convenience of description, the sealing assembly 30 side of the cylindrical battery 1 is defined as "the upper side", and the can bottom 22 side of the housing can 20 is defined as "the lower side".

The cylindrical battery 1 further comprises a positive electrode current collecting plate 40 which is an annular current collecting member to which a positive electrode lead 11 is connected and which is welded to the sealing assembly 30, and a gasket 50 that is disposed between the housing can 20 and the sealing assembly 30 and covers a lower surface of the positive electrode current collecting plate 40 that faces the electrode assembly 10. The cylindrical battery 1 further comprises an insulating plate 60 that is disposed between the electrode assembly 10 and the grooved portion 23 and between the electrode assembly 10 and the positive electrode current collecting plate 40. The insulating plate 60 prevents the positive electrode and the positive electrode lead 11 from contacting the housing can 20, and prevents the positive electrode lead 11 from contacting the negative electrode of the electrode assembly 10. The cylindrical battery 1 may have a lower insulating plate disposed between the electrode assembly 10 and a can bottom 22.

Although described in detail below, the gasket 50 has an inner peripheral wall 52 that covers an inner peripheral surface forming a peripheral edge of an opening portion 43 of the positive electrode current collecting plate 40. The cylindrical battery 1 is manufactured by housing the electrode assembly 10 and the positive electrode current collecting plate 40 in the housing can 20 and injecting an electrolyte solution into the housing can 20, and then welding the sealing assembly 30 and the positive electrode current collecting plate 40 together, but the gasket 50 having the inner peripheral wall 52 prevents the electrolyte solution from contacting the positive electrode current collecting plate 40. In the manufacturing steps of the cylindrical battery 1, the electrolyte solution is injected so as not to exceed an upper end of the inner peripheral wall 52. In the present embodiment, the positive electrode current collecting plate 40 to which the positive electrode lead 11 is connected is exemplified as the current collecting member, but alternatively, a negative electrode current collecting member to which a negative electrode lead is connected may also serve as the current collecting member.

As described above, the electrode assembly 10 has a wound structure in which the positive electrode and the negative electrode are spirally wound with the separator interposed therebetween. Each of the positive electrode, the negative electrode, and the separator is a band-shaped elongate body, and the positive electrode, the negative electrode, and the separator are spirally wound so as to be alternately stacked in a radial direction of the electrode assembly 10. The negative electrode is formed to be slightly larger than the positive electrode in order to prevent precipitation of lithium. That is, the negative electrode is formed to be longer in the longitudinal direction and the width direction (short direction) than the positive electrode. The two separators are each formed to be slightly larger than at least the positive electrode, and are disposed so as to interpose, for example, the positive electrode therebetween.

The electrode assembly 10 has the positive electrode lead 11 connected to the positive electrode by welding or the like, and the negative electrode lead connected to the negative electrode by welding or the like. The positive electrode lead 11 electrically connects the positive electrode and the sealing assembly 30 via the positive electrode current collecting plate 40. The positive electrode lead 11 extends from an upper end of the electrode assembly 10, and is welded to an upper surface of the positive electrode current collecting plate 40 that faces the sealing assembly 30 through an opening portion formed in each of the insulating plate 60, the gasket 50, and the positive electrode current collecting plate 40. The negative electrode lead electrically connects the negative electrode and the housing can 20. Therefore, the sealing assembly 30 functions as a positive electrode external terminal, and the housing can 20 functions as a negative electrode external terminal.

The positive electrode has a positive electrode core, and a positive electrode mixture layer disposed on the positive electrode core. For the positive electrode core, a foil of metal such as aluminum, an aluminum alloy, stainless steel, or titanium, which is stable within a potential range of the positive electrode, a film in which such a metal is disposed on a surface layer thereof, or the like can be used. The positive electrode mixture layer includes a positive electrode active material, a conductive agent, and a binder, and is preferably provided on each surface of the positive electrode core except for portions to which the positive electrode leads 11 are connected. For the positive electrode active material, a lithium-transition metal composite oxide containing a transition metal element such as Ni, Co, and Mn is used.

The positive electrode lead 11 is a strip-shaped conductive member, and is made of, for example, a metal containing aluminum as a main component. In the present embodiment, a plurality of positive electrode leads 11 are connected to the positive electrode. In each positive electrode lead 11, one end side in its longitudinal direction is welded to the positive electrode, and the other end side in the longitudinal direction is welded to the positive electrode current collecting plate 40. The cylindrical battery 1 has a simple current collecting structure in which the positive electrode and the positive electrode current collecting plate 40 are directly connected by the positive electrode leads 11, and is excellent in the output characteristic. In the positive electrode, a plurality of core exposed portions where a surface of a positive electrode core is exposed without providing a positive electrode mixture layer on the positive electrode core are provided so as to be spaced away from each other in a length direction of the positive electrode. The positive electrode leads 11 are connected to the exposed portions in a one-to-one manner by welding or the like.

The intervals between the exposed portions to which the respective positive electrode leads 11 are welded may be uniform or may vary, but the layout of the positive electrode leads 11 is set as appropriate according to the battery performance of the cylindrical battery 1 such as the capacity and the output characteristic. Therefore, the intervals between the core exposed portions are determined according to the layout and the like. The number of the cylindrical batteries 1 may be one, but, in the large-sized battery, it may be preferably plural, and may be, for example, greater than or equal to three and less than or equal to 15 or greater than or equal to six and less than or equal to 10.

The negative electrode has a negative electrode core, and a negative electrode mixture layer disposed on the negative electrode core. For the negative electrode core, a foil of metal such as copper, a copper alloy, stainless steel, nickel, or a nickel alloy, which is stable within a potential range of the negative electrode, a film in which such a metal is disposed on a surface layer thereof, or the like can be used. The negative electrode mixture layer includes a negative electrode active material, and a binder, and is preferably provided on each surface of the negative electrode core except for a portion to which a negative electrode lead is connected. For the negative electrode active material, a carbon material that reversibly occludes and releases lithium ions is generally used. For the negative electrode active material, an element such as Si or Sn that forms an alloy with Li, a material containing such an element, or the like may be used. The negative electrode core and the housing can 20 can be electrically connected without the negative electrode lead being provided therebetween.

For the separator, a porous sheet having an ion permeation property and an insulation property is used. Specific examples of the porous sheet include a fine porous thin film, a woven fabric, and a nonwoven fabric. As a material of the separator, polyolefin such as polyethylene or polypropylene, or a cellulose is preferable. The separator may have a single-layer structure or a multi-layer structure. The separator may have a multi-layer structure including a thermoplastic resin layer such as polyolefin and a cellulose fiber layer, a two-layer structure of polyethylene (PE) and polypropylene (PP), or a three-layer structure of PE, PP, and PE.

The non-aqueous electrolyte housed in the housing can 20 includes a non-aqueous solvent, and an electrolyte salt dissolved in the non-aqueous solvent. For the non-aqueous solvent, for example, esters, ethers, nitriles, amides, or mixed solvents of two of more of these are used. The non-aqueous solvent may contain a halogen-substituted product obtained by substituting at least a part of hydrogen in these solvents with a halogen atom such as fluorine. Examples of the non-aqueous solvent include ethylene carbonate (EC), ethylmethyl carbonate (EMC), dimethyl carbonate (DMC), and mixed solvents of these. For the electrolyte salt, for example, a lithium salt such as LiPF₆ is used.

The housing can 20 is a bottomed cylindrical metallic housing can in which one side (upper end) in the axial direction opens, and has the side wall 21 formed in a cylindrical shape and the can bottom 22 having a circular shape in a bottom view. The housing can 20 is generally made of a metal containing iron as a main component, but may be made of a metal containing aluminum or the like as a main component. The housing can 20 has the grooved portion 23 formed along a circumferential direction of the side wall 21. The grooved portion 23 is formed at a portion separated from the upper end of the housing can 20 by a predetermined length in the vicinity of the opening portion of the housing can 20. The predetermined length is, for example, a length corresponding to greater than or equal to 1% and less than or equal to 20% of an axial length of the housing can 20.

In the present embodiment, a safety vent mechanism that operates when an abnormality occurs in the cylindrical battery 1 is provided in the can bottom 22 of the housing can 20. On the other hand, the safety vent mechanism is not provided in the sealing assembly 30. In the can bottom 22, a thin portion is formed, for example. If the internal pressure of the cylindrical battery 1 increases due to occurrence of an abnormality, this thin portion preferentially ruptures, so that a gas discharge port is formed in the can bottom 22.

The grooved portion 23 is a portion where a part of the side wall 21 projects toward an inner side of the housing can 20, and is formed by, for example, performing spinning on the side wall 21 from the outside. At a position where the grooved portion 23 is formed, the diameter of the housing can 20 is reduced, and a thin line-shaped groove is formed on an outer peripheral surface of the side wall 21. The grooved portion 23 has a substantial U shape in a cross section, and is preferably formed in an annular shape over the entire length in the circumferential direction of the side wall 21. The grooved portion 23 is formed by processing the side wall 21 after the electrode assembly 10 is housed in the housing can 20.

The sealing assembly 30 is a metallic member having a disk shape. In the sealing assembly 30, a radially center portion thereof has a shape projecting toward the outside of the cylindrical battery 1. A wiring material is connected to the sealing assembly 30 when the cylindrical battery 1 is formed into a module to form a battery assembly. Therefore, the sealing assembly 30 functions as the positive electrode external terminal of the cylindrical battery 1, and is also called an external terminal or a top cover. The sealing assembly 30 is disposed on the grooved portion 23 of the housing can 20 via the gasket 50, and is fixed to an upper end portion of the housing can 20. The upper end portion of the housing can 20 is bent inward, and is crimped to the sealing assembly 30.

The positive electrode current collecting plate 40 is a metallic member having a diameter similar to that of the sealing assembly 30, and is disposed on a side closer to the electrode assembly 10 than the sealing assembly 30. The positive electrode current collecting plate 40 has the opening portion 43 at the radially center portion, and is formed in an annular shape. The positive electrode leads 11 are welded to an inner peripheral side portion of the positive electrode current collecting plate 40, and the sealing assembly 30 is welded to an outer peripheral side portion of the positive electrode current collecting plate 40. Although described in detail below, the positive electrode leads 11 are welded to the positive electrode current collecting plate 40 before the electrolyte solution is injected into the housing can 20, and the sealing assembly 30 is welded to the positive electrode current collecting plate 40 after the electrolyte solution is injected into the housing can 20.

The gasket 50 is a resin member for preventing the housing can 20 from contacting the sealing assembly 30 and the positive electrode current collecting plate 40 and for ensuring insulation between the positive and negative electrodes. The gasket 50 is interposed between the housing can 20 and the sealing assembly 30 and between the housing can 20 and the positive electrode current collecting plate 40, and covers the lower surface and the inner peripheral surface of the positive electrode current collecting plate 40. The gasket 50 closes a gap between the housing can 20 and the sealing assembly 30 to seal the inside of the cylindrical battery 1. The gasket 50 has an opening portion 51 at a radially center portion thereof so that the opening portion 51 overlaps the opening portion 43 of the positive electrode current collecting plate 40 in an up-down direction, and is formed in an annular shape.

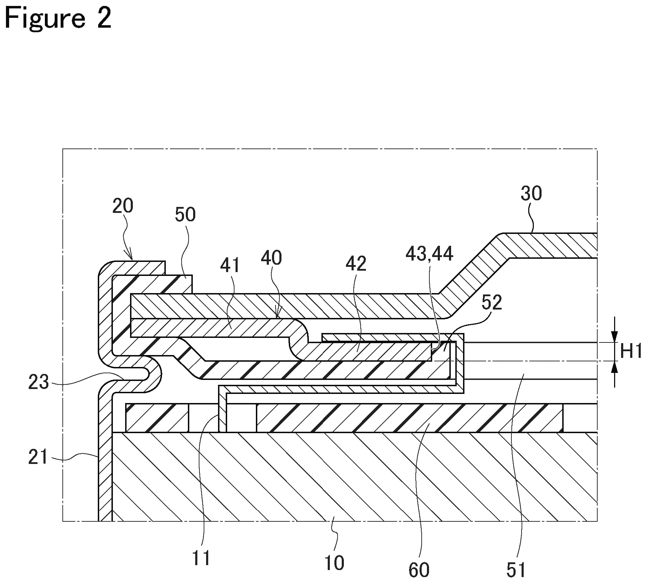

Hereinafter, configurations of the positive electrode current collecting plate 40 and the gasket 50 will be described in detail with reference to FIG. 2. FIG. 2 is an enlarged view of part A of FIG. 1.

As illustrated in FIG. 2, the positive electrode current collecting plate 40 is bent toward the sealing assembly 30 side at a position away from the peripheral edge of the opening portion 43 toward the radially outer side. The positive electrode current collecting plate 40 includes a first region 41 located on the radially outer side than the bent portion, and a second region 42 located on the radially inner side than the bent portion and located one step lower than the first region 41. The first region 41 contacts the sealing assembly 30, and a part of the first region 41 is welded to the sealing assembly 30. The upper surface of the second region 42 is located on a side closer to the electrode assembly 10 than the upper surface of the first region 41, and a gap exists between the second region 42 and the sealing assembly 30. The first region 41 and the second region 42 are formed, for example, in an annular shape with a constant width along the circumferential direction and is formed flat along the radial direction.

The positive electrode current collecting plate 40 is a conductive member in which the opening portion 43 and the annular step serving as a boundary between the first region 41 and the second region 42 are formed. The thickness of the positive electrode current collecting plate 40 is, for example, greater than or equal to 0.3 mm and less than or equal to 1.0 mm, or greater than or equal to 0.4 mm and less than or equal to 0.8 mm, and is substantially constant over the entirety of the first region 41 and the second region 42. The step of the positive electrode current collecting plate 40 may be formed to be higher than the thickness of the current collecting plate. A difference in height (height of the step) between the upper surfaces of the first region 41 and the second region 42 is, for example, greater than or equal to 0.8 mm and less than or equal to 1.5 mm.

The opening portion 43 of the positive electrode current collecting plate 40 is a through hole for the positive electrode leads 11 and the electrolyte solution to pass therethrough. The opening portion 43 is formed in, for example, a substantially perfect circular shape in a plan view, but the shape thereof is not limited to a particular shape. A plurality of positive electrode leads 11 extend to the upper surface side of the positive electrode current collecting plate 40 through the opening portion 43 in the positive electrode current collecting plate 40 and the opening portion 51 in the gasket 50, and are welded to the upper surface of the second region 42. A welding portion with the sealing assembly 30 that is formed in the first region 41 may be continuously formed in an annular shape, for example, and alternatively, a plurality of welding portions may be intermittently formed on the same circumference.

An inner peripheral surface 44 of the positive electrode current collecting plate 40 forming the peripheral edge of the opening portion 43 is, for example, a surface along a thickness direction (up-down direction) of the current collecting plate, but may be gently curved or may be inclined relative to the up-down direction. The inner peripheral surface 44 in the present embodiment is a surface substantially vertical to the upper and lower surfaces of the positive electrode current collecting plate 40. The height (length along the up-down direction) of the inner peripheral surface 44 corresponds to the thickness of the second region 42.

In the cylindrical battery 1, the lower surface and the inner peripheral surface 44 of the positive electrode current collecting plate 40 are covered by the gasket 50. In the manufacturing steps of the cylindrical battery 1, the electrolyte solution is injected into the housing can 20 after the electrode assembly 10 and the positive electrode current collecting plate 40 are housed in the housing can 20. When the electrolyte solution contacts the positive electrode current collecting plate 40, the electrolyte solution flows up to the first region 41 which is a welding portion with the sealing assembly 30 by a capillary phenomenon, which may cause a welding defect, but the gasket 50 covering the lower surface and the inner peripheral surface 44 of the positive electrode current collecting plate 40 can be used to prevent the current collecting plate from being wet with the electrolyte solution. As a result, it is possible to prevent a welding defect between the sealing assembly 30 and the positive electrode current collecting plate 40 due to the electrolyte solution.

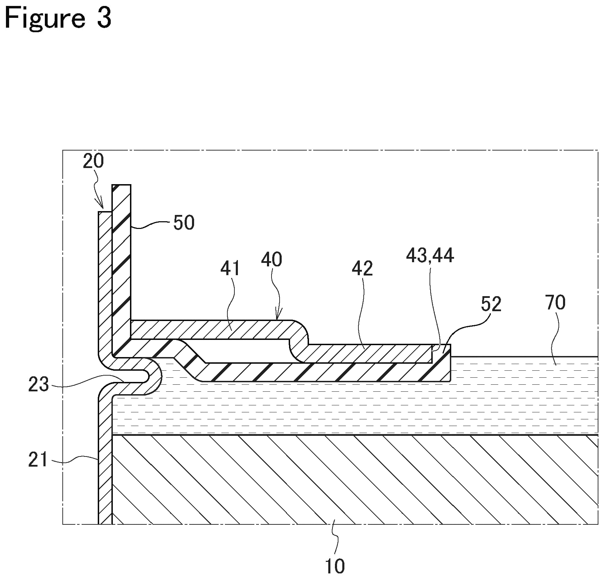

The gasket 50 covers the inner peripheral surface 44 by inserting a part of the gasket 50 into the opening portion 43 from below. The gasket 50 has the opening portion 51 for the positive electrode leads 11 and the electrolyte solution to pass therethrough, and the inner peripheral wall 52 that covers the inner peripheral surface 44 of the positive electrode current collecting plate 40. The inner peripheral wall 52 is a wall provided upright along the peripheral edge of the opening portion 51, and prevents the positive electrode current collecting plate 40 from being wet with the electrolyte solution. In a step of injecting the electrolyte solution, the electrolyte solution is injected up to the height exceeding the lower surface of the positive electrode current collecting plate 40, for example. At this time, the electrolyte solution is preferably injected so as not to exceed the upper end of the inner peripheral wall 52 (see FIG. 3 described below).

The gasket 50 covers the entirety of the lower surface of the positive electrode current collecting plate 40. The gasket 50 has no opening portion through which the lower surface of the positive electrode current collecting plate 40 is exposed. The opening portion formed in the gasket 50 is only the opening portion 51 at the radially center portion, and a gap from which the electrolyte solution can permeate does not exist in the lower surface of the gasket 50 that faces the electrode assembly 10. In the present embodiment, a bent portion is formed also in the lower surface of the gasket 50 to correspond to the above-described bent portion formed in the positive electrode current collecting plate 40. The bent portion of the gasket 50 is bent in the thickness direction, so that a step is formed in the lower surface of the gasket 50.

An outer peripheral side end portion of the gasket 50 extends to the upper surface of the sealing assembly 30, and is pressed from above by the upper end portion of the crimped housing can 20. The gasket 50 is attached to an area from the peripheral edge portion of the upper surface of the sealing assembly 30 to the inner peripheral surface 44 of the positive electrode current collecting plate 40 while covering the sealing assembly 30 and the outer peripheral surface and the lower surface of the positive electrode current collecting plate 40.

The gasket 50 is made of a resin material having high chemical resistance (high resistance to electrolyte). An example of preferable material constituting the gasket 50 is polypropylene. The thickness of the gasket 50 is not limited to a particular thickness, but is, for example, greater than or equal to 0.3 mm and less than or equal to 1.0 mm at the inner peripheral wall 52 and a portion covering the lower surface of the positive electrode current collecting plate 40.

The inner peripheral wall 52 is formed in an annular shape along the inner peripheral surface 44 of the positive electrode current collecting plate 40. In other words, the inner peripheral wall 52 is formed in annular shape along a peripheral edge of the opening portion 51. The inner peripheral wall 52 is, for example, a stand wall formed vertically to the upper surface of the gasket 50 facing the lower surface of the positive electrode current collecting plate 40. A height H1 of the inner peripheral wall 52 may change along the circumferential direction, but in the present embodiment, is constant along the circumferential direction. A height H1 of the inner peripheral wall 52 means a length along the up-down direction from the upper surface of the gasket 50 to the upper end of the inner peripheral wall 52.

The inner peripheral wall 52 preferably covers greater than or equal to 50% of the height of the inner peripheral surface 44 of the positive electrode current collecting plate 40 and is formed at the height not exceeding the upper end of the inner peripheral surface 44. The upper end position of the inner peripheral wall 52 is set to be lower than the upper surface of the second region 42 of the positive electrode current collecting plate 40, thereby making it easy to weld the positive electrode leads 11 to the upper surface of the second region 42. In the example illustrated in FIG. 2, the upper surface of the gasket 50 contacts the lower surface of the positive electrode current collecting plate 40, but a small gap may exist between the two surfaces. When a gap exists between the upper surface of the gasket 50 and the lower surface of the second region 42 of the positive electrode current collecting plate 40, the inner peripheral wall 52 preferably has at least a height obtained by adding the height corresponding to the gap to the height corresponding to 50% of the height of the inner peripheral surface 44.

The inner peripheral wall 52 is formed to be high in a range of not exceeding the upper end of the inner peripheral surface 44. The inner peripheral wall 52 is formed, for example, at the height that covers greater than or equal to 60%, greater than or equal to 70%, or greater than or equal to 80% of the height of the inner peripheral surface 44. When the upper surface of the gasket 50 contacts the lower surface of the second region 42 of the positive electrode current collecting plate 40, the height H1 of the inner peripheral wall 52 is preferably greater than or equal to 50% of the height of the inner peripheral surface 44, but may also be greater than or equal to 60%, greater than or equal to 70%, or greater than or equal to 80%. The height of the inner peripheral surface 44 is the same as the thickness of the second region 42, and thus it can also be said that the height H1 of the inner peripheral wall 52 is preferably greater than or equal to 50% of the thickness of the second region 42.

The inner peripheral wall 52 may be formed in an annular shape along the inner peripheral surface 44 of the positive electrode current collecting plate 40 to cover substantially the entire area of the inner peripheral surface 44. In the example of FIG. 2, the upper surface of the second region 42 of the positive electrode current collecting plate 40 is flush with the upper end surface of the inner peripheral wall 52, and the inner peripheral wall 52 formed in an annular shape covers the entire area of the inner peripheral surface 44. The positive electrode current collecting plate 40 is disposed on the grooved portion 23 of the housing can 20, for example, in a state of being assembled to the gasket 50. The inner peripheral wall 52 may be joined to the inner peripheral surface 44 of the positive electrode current collecting plate 40.

Hereinafter, a method of manufacturing the cylindrical battery 1 will be described with reference to FIG. 3. FIG. 3 is a view illustrating a step of injecting an electrolyte solution, and from the perspective of clarity of the drawing, the positive electrode leads 11 and the insulating plate 60 are not illustrated.

The cylindrical battery 1 is manufactured, for example, in the following steps.
(1) The electrode assembly 10 and the insulating plate 60 are housed in the housing can 20. For example, when the insulation can be ensured by only the separator included in the electrode assembly 10, the insulating plate 60 can be omitted.
(2) The grooved portion 23 is formed in the side wall 21 of the housing can 20, and the gasket 50 and the positive electrode current collecting plate 40 are disposed on the grooved portion 23. At this time, the positive electrode current collecting plate 40 and the gasket 50 may be assembled in advance before being disposed on the grooved portion 23.
(3) The electrolyte solution is injected into the housing can 20 in which the electrode assembly 10, the positive electrode current collecting plate 40, and the gasket 50 are housed. The electrolyte solution permeates the can inner portion through the opening portions 43 and 51 of the positive electrode current collecting plate 40 and the gasket 50, and is absorbed by the electrode assembly 10.
(4) The sealing assembly 30 is disposed on the positive electrode current collecting plate 40, and the sealing assembly 30 is welded to the first region 41 of the positive electrode current collecting plate 40. The sealing assembly 30 is preferably laser-welded, and the upper surface of the sealing assembly 30 is irradiated with laser light.
(5) The upper end portion of the housing can 20 is bent inward, and the sealing assembly 30 is crimp-fixed. The crimp-fixing of the sealing assembly 30 may be performed before the sealing assembly 30 is welded to the positive electrode current collecting plate 40.

As illustrated in FIG. 3, in step (2) described above, the lower surface and the inner peripheral surface 44 of the positive electrode current collecting plate 40 are covered by the gasket 50. The positive electrode leads 11 are welded to the upper surface of the second region 42 of the positive electrode current collecting plate 40 before the electrolyte solution 70 is injected. The welding of the positive electrode leads 11 can be performed, for example, by ultrasonic welding.

As illustrated in FIG. 3, in step (3) described above, the electrolyte solution 70 is injected up to the height exceeding the lower surface of the positive electrode current collecting plate 40. On the other hand, the liquid surface of the electrolyte solution 70 is controlled not to exceed the upper end of the inner peripheral wall 52 of the gasket 50. In this case, since the inner peripheral surface 44 of the positive electrode current collecting plate 40 is covered by the inner peripheral wall 52, the electrolyte solution 70 does not adhere to the inner peripheral surface 44. Since the lower surface of the positive electrode current collecting plate 40 is also covered by the gasket 50, the electrolyte solution does not permeate the gap between the positive electrode current collecting plate 40 and the gasket 50.

When the inner peripheral surface of the positive electrode current collecting plate is exposed without being covered by the gasket, the electrolyte solution flows up to the first region which is a welding portion with the sealing assembly by a capillary phenomenon, and the laser welding is performed under the existence of the electrolyte solution. In this case, a welding defect may occur due to the vaporized electrolyte solution. In contrast, in the mode illustrated in FIG. 3, the positive electrode current collecting plate 40 is covered by the gasket 50 and the electrolyte solution 70 does not adhere to the positive electrode current collecting plate 40, so that the welding can be performed under the inexistence of the electrolyte solution and a good welding state can be achieved.

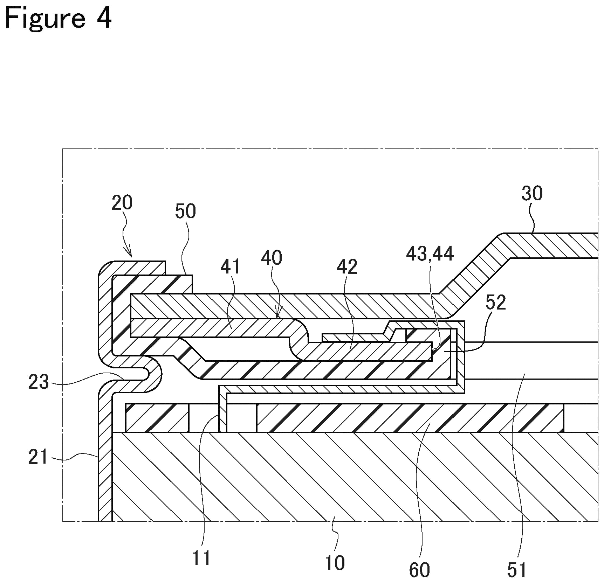

Note that the embodiment described above can be changed in design as appropriate within a range that does not impair the object of the present disclosure. For example, as illustrated in FIG. 4, the inner peripheral wall 52 of the gasket 50 may extend to the upper surface of the positive electrode current collecting plate 40 beyond the upper end of the inner peripheral surface 44 of the positive electrode current collecting plate 40.

In the example illustrated in FIG. 4, the inner peripheral wall 52 formed in the inner peripheral portion of the gasket 50 is formed in an annular shape along the inner peripheral surface 44 of the positive electrode current collecting plate 40, and covers the entire area of the inner peripheral surface 44 from the lower end to the upper end of the inner peripheral surface 44 and extends to the upper surface of the second region 42 to cover the upper surface of the second region 42 located at the peripheral edge of the opening portion 43. In this case, it is possible to reliably prevent the electrolyte solution from adhering to the positive electrode current collecting plate 40. On the other hand, the inner peripheral wall 52 projects more upward than the upper surface of the second region 42, so that a portion of the positive electrode lead 11 overlapping the inner peripheral wall 52 is bent to project upward.

### REFERENCE SIGNS LIST

1 Cylindrical battery, 10 Electrode assembly, 11 Positive electrode lead 11 Housing can, 21 Side wall, 22 Can bottom, 23 Grooved portion, 30 Sealing assembly, 40 Positive electrode current collecting plate, 41 First region, 42 Second region, 43 Opening portion, 44 Inner peripheral surface, 50 Gasket, 51 Opening portion, 52 Inner peripheral wall 60 Insulating plate

## Claims

1. A cylindrical battery, comprising: an electrode assembly; a bottomed cylindrical housing can that houses the electrode assembly and an electrolyte solution; and a sealing assembly with which an opening portion of the housing can is capped, the cylindrical battery including a lead connected to an electrode included in the electrode assembly, the cylindrical battery further comprising:
an annular current collecting member to which the lead is connected, the annular current collecting member being welded to the sealing assembly; and
a gasket that is disposed between the housing can and the sealing assembly and covers a lower surface of the current collecting member that faces the electrode assembly, wherein
the gasket has an inner peripheral wall that covers an inner peripheral surface forming a peripheral edge of an opening portion of the current collecting member.

2. The cylindrical battery according to claim 1, wherein
the inner peripheral wall is formed in an annular shape along the inner peripheral surface of the current collecting member.

3. The cylindrical battery according to claim 1 or 2, wherein
the inner peripheral wall covers greater than or equal to 50% of a height of the inner peripheral surface of the current collecting member and is formed at height not exceeding an upper end of the current collecting member.

4. The cylindrical battery according to claim 3, wherein
the inner peripheral wall is formed in an annular shape along the inner peripheral surface of the current collecting member, and covers substantially an entire area of the inner peripheral surface of the current collecting member.

5. The cylindrical battery according to claim 1 or 2, wherein
the inner peripheral wall extends to an upper surface of the current collecting member beyond an upper end of the inner peripheral surface.
